Europäisches Patentamt

European Patent Office

Office européen des brevets

(11) Veröffentlichungsnummer: **0 678 415 A1**

(12) **EUROPÄISCHE PATENTANMELDUNG**

(21) Anmeldenummer: **95105600.1**

(22) Anmeldetag: **13.04.95**

(51) Int. Cl.6: **B60L 13/00**, B60L 13/06

(30) Priorität: **21.04.94 DE 4413899**

(43) Veröffentlichungstag der Anmeldung:
**25.10.95 Patentblatt 95/43**

(84) Benannte Vertragsstaaten:
**AT BE CH DE ES FR GB IT LI SE**

(71) Anmelder: **Magnetbahn GmbH**
**Beethovenstrasse 51 B**
**D-38106 Braunschweig (DE)**

(72) Erfinder: **Blümel, Gottfried, Dipl.-Ing.**
**Ahornweg 3**
**D-85234 Odelzhausen (DE)**

Erfinder: **Scholz, Frieder, Dr.-Ing.**
**Alpenstrasse 22**
**D-83734 Hausham (DE)**
Erfinder: **Schlögl, Wolfgang, Dipl.-Ing.**
**Netzegaustrasse 3**
**D-81377 München (DE)**
Erfinder: **Pechaty, Karel, Dipl.-Ing.**
**Falkenweg 13**
**D-82319 Starnberg (DE)**

(74) Vertreter: **Erbacher, Alfons (DE)**
**Theodor-Stern-Kai 1**
**D-60596 Frankfurt (DE)**

(54) Linearmotorfahrzeug mit permanent-elekfromagnetischer Regelung.

(57) Bei einem Fahrzeug, ausgebildet als Läufer eines Linearmotors, bei dem Permanentmagnete auf dem Fahrgestell des Fahrzeugs mit in entlang des Fahrwegs verlegten Langstatoren erzeugten magnetischen Wanderfeldern das Fahrzeug antreiben und zumindest teilweise tragen, wobei das Fahrzeug mit oberen und unteren Führungsrollen zur Erzielung eines Luftspaltes zwischen den Magneten auf dem Fahrzeug und den Langstatoren in einer bestimmten Größenordnung ausgestattet ist, ist vorgesehen, daß die Achsen der oberen Führungsrollen und unteren Führungsrollen starr mit der Magnetleiste verbunden sind, zur Erzielung eines im wesentlichen konstanten Luftspaltes, daß die fehlende oder überschüssige Tragkraft durch die Führungsrollen bis zu deren Belastungsgrenze abtragbar ist, daß Elektromagnete bei Überschreiten der Belastungsgrenze der Führungsrollen zur Lastkompensation zuschaltbar sind.

Fig. 2

Die vorliegende Erfindung betrifft ein Fahrzeug mit Linearantrieb nach dem Oberbegriff des Anspruchs 1. Aus der DE-OS 31 07 341 ist ein solches Fahrzeug bekannt, bei dem Permanentmagnete auf dem Fahrzeug mit in Langstatoren entlang des Fahrwegs erzeugten magnetischen Wanderfeldern zusammenwirken und das Fahrzeug antreiben und zumindest teilweise tragen. Der Luftspalt zwischen den Langstatoren und Permanentmagneten wird hierbei je nach den verschiedenen Beladungszuständen zur Regelung der Magnetkraft mechanisch mittels Federn und Hebeln eingestellt, wobei Führungsrollen die Lage definierenden Einrichtungen darstellen. Nachteil dieser mechanischen Luftspaltregelung ist deren große Hysterese, die bei einzelnen Betriebszuständen bewirken kann, daß die Führungsrollen überlastet werden. Weiterhin sind die Montage und Wartungsarbeiten dieses Hebelsystems arbeitsintensiv und damit teuer. Weiterhin ist es aus der DE-OS 29 33 451 bekannt, Elektromagnete und bei Spitzenbedarf zusätzlich Räder mit einem Hebelsystem zur Abstandhaltung und zum Tragen des Fahrzeugs einzusetzen. Nachteil hierbei ist der hohe elektrische Energieverbrauch der Elektromagnete und die aufwendigen Montage- und Wartungsarbeiten für das Hebelsystem der zusätzlichen Räder.

Aufgabe der vorliegenden Erfindung ist es daher, ein Fahrzeug für einen Linearmotor anzugeben, bei dem die Führungsrollen nicht überlastet werden, bei dem auf ein aufwendiges Hebelsystem verzichtet werden kann und der Energieverbrauch für die Elektromagnete gering bleibt. Diese Aufgabe wird durch ein Fahrzeug nach Anspruch 1 gelöst. Vorteilhafte Ausgestaltungen der Erfindung sind den Unteransprüchen zu entnehmen. Das erfindungsgemäße Fahrzeug weist in Fahrtrichtung gesehen rechts und links Permanentmagnete und Elektromagnete auf, die jeweils auf einer Magnetleiste montiert sind. An dieser Magnetleiste oder in festem Abstand dazu sind die Führungsrollen oberhalb und unterhalb einer Führungsleiste des Fahrwegs montiert um so den Abstand zwischen den Langstatoren entlang der Strecke und den Magneten auf der Magnetleiste nahezu konstant zu halten. Der Kraft der Permanentmagnete und die Gewichtskraft des Fahrzeugs sind bei einer bestimmten Beladung des Fahrzeugs im Gleichgewicht. Sobald sich diese ändert, werden bei zunehmender Beladung die oberen Führungsrollen und bei abnehmender Beladung die unteren Führungsrollen belastet. Erst wenn die Führungsrollen ihre Belastungsgrenze erreichen, werden die zusätzlich abzutragenden Kräfte durch entsprechenden Einsatz der Elektromagnete kompensiert. Besonders vorteilhaft ist es, die Permanentmagnete so auszulegen, daß die Gewichtskraft des Fahrzeugs beim häufigsten Betriebsfall durch die Permanentmagnete gerade kompensiert wird und die Führungsrollen dann unbelastet und die Elektromagnete ausgeschaltet sind. Weiterhin kann es vorteilhaft sein, die Permanentmagnete und Führungsrollen so auszulegen, daß beim leeren Fahrzeug die Überkompensation der Anziehungskräfte durch die unteren Führungsrollen alleine aufgebracht werden kann und die Elektromagnete erst zugeschaltet werden, wenn die Beladung des Fahrzeugs so zugenommen hat, daß die oberen Führungsrollen an ihrer Belastungsgrenze angelangt sind.

Die Erfindung wird im folgenden anhand der Figuren näher erläutert. Es zeigen:

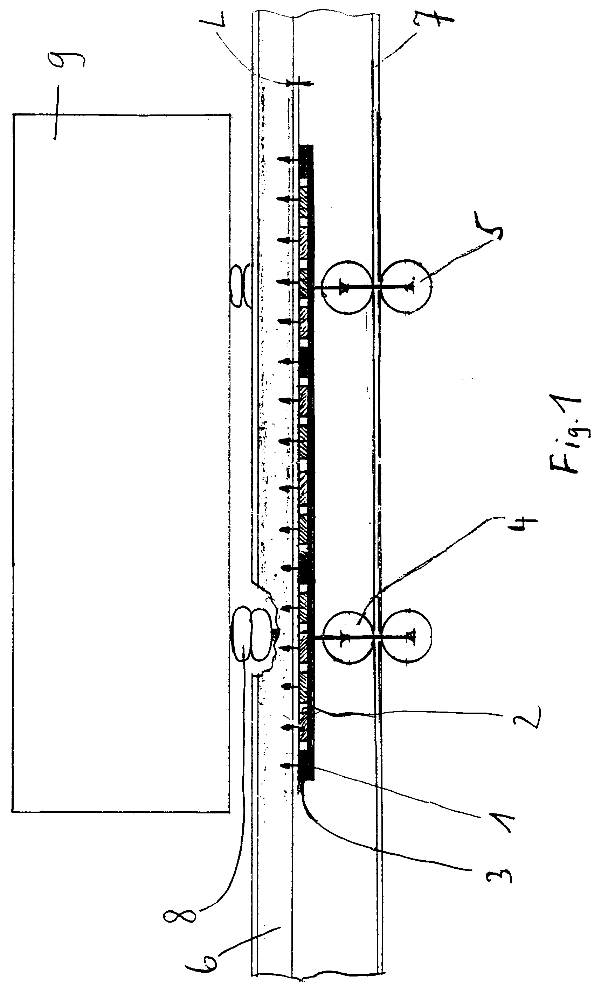

Figur 1      einen Längsschnitt durch ein erfindungsgemäßes Fahrzeug mit dazugehörigem Fahrweg;

Figur 2      ein Diagramm mit den von den einzelnen zu erbringenden Kräften der einzelnen Bauteile.

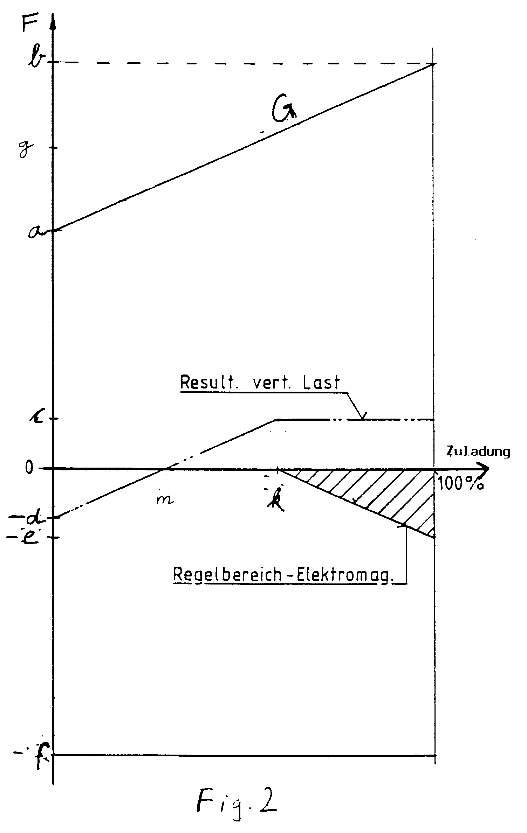

Das Fahrzeug weist seitlich jeweils ein Magnetleiste 1 mit Permanentmagneten 2 und Elektromagneten 3 auf. Die Achsen der oberen Führungsrollen 4 und unteren Führungsrollen 5 sind starr mit der Magnetleiste 1 verbunden. Dies führt zu einem nahezu konstanten Luftspalt L zwischen den Permanentmagneten 2, Elektromagneten 3 und dem Langstator 6. Die Führungsrollen 4, 5 können, wie dargestellt, unterhalb der Magnetleiste oder auch seitlich der Magnetleiste 1 angebracht sein, um eine flachere Bauweise zu erhalten. Die Führungsrollen 4, 5 rollen unter und auf der Führungsschiene 7 entlang des Fahrwegs ab. Die Permanentmagnete 2 werden vom Langstator 6 angezogen und tragen so über die Magnetleiste 1 und Federeinrichtung 8 den Wagenkasten 9. Die Beladung des Fahrzeugs wird vorzugsweise über Druck- oder Lastsensoren an der Federeinrichtung 8 gemessen. Sofern die Belastungsgrenze an den oberen Führungsrollen 4 oder unteren Führungsrollen 5 nicht überschritten ist, bleiben die Elektromagnete 3 ausgeschaltet. Erst wenn die Belastungsgrenze erreicht wird, werden die Elektromagnete durch eine nicht dargestellte Steuerung zugeschaltet. Mit dem Überschreiten der Belastungsgrenze der unteren Führungsrollen 5 werden die Permanentmagnete 2 von den Elektromagneten 3 in ihrer Wirkung geschwächt. Mit dem Überschreiten der Belastungsgrenze der oberen Führungsrollen 4 werden die Permanentmagnete 2 von den Elektromagneten 3 in ihrer Wirkung verstärkt. Die vertikal auftretenden einzelnen Kräfte werden in Figur 2 anschaulich dargestellt. Es bedeuten:

a      die Gewichtskraft des leeren Fahrzeugs;

b      die Gewichtskraft des beladenen Fahrzeugs;

g      die Gewichtskraft des teilbeladenen Fahrzeugs, bei der die Belastungsgrenze der oberen Führungsrollen 4 erreicht ist;

c die Belastungsgrenze der Summe der oberen Führungsrollen 4 eines Fahrzeugs;

-d die Belastungsgrenze der Summe der unteren Führungsrollen eines Fahrzeugs;

-e der Maximalwert der durch die Elektromagnete 3 der Gewichtskraft des Fahrzeugs entgegengesetzten Kraft;

-f die Kraft, die die Permanentmagnete 2 der jeweiligen Gewichtskraft des Fahrzeugs entgegensetzt;

m der prozentuale Wert der Zuladung, bei dem die oberen und unteren Führungsrollen unbelastet sind;

k der prozentuale Wert der Zuladung, bei dem die Belastungsgrenze der oberen Führungsrollen 4 erreicht ist und bei dessen Überschreiten die Elektromagnete 3 eine zusätzliche Kraft, die der Gewichtskraft des Fahrzeugs entgegengesetzt ist, aufbringen müssen;

G die Gewichtskurve des Fahrzeugs zwischen 0 und 100 % Zuladung.

Sofern das Fahrzeug leer ist, und somit das Gewicht des Fahrzeugs G = a und die Zuladung somit 0 % ist, überkompensieren nach dem vorliegenden Beispiel Permanentmagnete 2 mit der Kraft -f die Gewichtskraft des leeren Fahrzeugs a um den Wert -d. Dies bedeutet, daß alle unteren Führungsrollen 5 mit insgesamt der Kraft d gegen die Unterseite der Führungsschiene 7 gepreßt werden. Je weiter das Gewicht des Fahrzeugs G zunimmt, um so weniger werden die unteren Führungsrollen 5 belastet, bis beim Wert m das Gewicht des Fahrzeugs G mit der Tragkraft der Permanentmagnete 2 übereinstimmt und somit alle Führungsrollen 4, 5 unbelastet sind. Bei weiter zunehmendem Gewicht des Fahrzeugs G werden die oberen Führungsrollen 4 gegen die Oberseite der Führungsschiene 7 gedrückt, bis ihre Belastungsgrenze beim Wert k erreicht ist. Sofern dieser Wert überschritten wird, werden die Elektromagnete 3 zugeschaltet um die Permanentmagnete 2 in ihrer Tragkraft zu verstärken und die resultierende vertikale Kraft, die durch die oberen Führungsrollen 4 abgetragen werden muß, an der Belastungsgrenze c der Summe der oberen Führungsrollen 4 eines Fahrzeugs zu halten. Es ist vorteilhaft bei selten vorkommenden Leerfahrten des Fahrzeugs die Tragkraft der Permanentmagnete 2 und die Belastungsgrenze der Führungsrollen 4, 5 so zu wählen, daß auch bei Leerfahrten und annäherungsweisen Leerfahrten die Tragkraft der Permanentmagnete 2 durch die Elektromagnete 3 abgeschwächt werden muß. Weiterhin ist es vorteilhaft die Tragkraft der Permanentmagnete 2 so auszulegen, daß die Tragkraft der Permanentmagnete 2 dem Fahrzeuggewicht G beim häufigsten Betriebsfall entspricht und so die Führungsrollen 4, 5 unbelastet sind und dadurch deren Standzeit verlängert wird. Es ist natürlich auch möglich die Tragkraft und damit die Belastungsgrenze der oberen und unteren Führungsrollen unterschiedlich auszuwählen.

Die Erfindung ist leicht abwandelbar. So ist eine äquivalente Ausgestaltung dadurch möglich, daß statt einer Führungsschiene 7 eine obere und eine untere Führungsschiene vorgesehen wird, wobei die Funktion der oberen Führungsrollen 4 dann von den auf der unteren Führungsschiene ablaufenden Rollen und die Funktion der unteren Führungsrollen 5 von den unterhalb der oberen Führungsschiene ablaufenden Rollen übernommen wird.

**Patentansprüche**

1. Fahrzeug, ausgebildet als Läufer eines Linearmotors, bei dem Permanentmagnete auf dem Fahrgestell des Fahrzeugs mit in entlang des Fahrwegs verlegten Langstatoren erzeugten magnetischen Wanderfeldern das Fahrzeug antreiben und zumindest teilweise tragen, wobei das Fahrzeug mit oberen und unteren Führungsrollen zur Erzielung eines Luftspaltes zwischen den Magneten auf dem Fahrzeug und den Langstatoren in einer bestimmten Größenordnung ausgestattet ist,
**dadurch gekennzeichnet,**
daß die Achsen der oberen Führungsrollen (4) und unteren Führungsrollen (5) starr mit der Magnetleiste (1) verbunden sind, zur Erzielung eines im wesentlichen konstanten Luftspaltes, daß die fehlende oder überschüssige Tragkraft durch die Führungsrollen (4, 5) bis zu deren Belastungsgrenze abtragbar ist, daß Elektromagnete bei Überschreiten der Belastungsgrenze der Führungsrollen (4, 5) zur Lastkompensation zuschaltbar sind.

2. Fahrzeug nach Anspruch 1, dadurch gekennzeichnet, daß die Kraft der Permanentmagnete (3) und die Belastungsgrenze der Führungsrollen (4, 5) so ausgewählt ist, daß bei leerem und teilbeladenem Fahrzeug die fehlende oder überschüssige Tragkraft der Permanentmagnete (3) nur durch die Führungsrollen (4, 5) abtragbar ist.

3. Fahrzeug nach Anspruch 1 oder 2, dadurch gekennzeichnet, daß die Tragkraft der Permanentmagnete (3) der Gewichtskraft des Fahrzeugs beim häufigsten Betriebsfall entspricht.

Fig.1

EP 0 678 415 A1

Fig. 2

Europäisches
Patentamt

**EUROPÄISCHER RECHERCHENBERICHT**

Nummer der Anmeldung

EP 95 10 5600

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-C-42 28 309 (MAGNET-BAHN GMBH) 17.März 1994 <br> * das ganze Dokument * <br> --- | 1-3 | B60L13/00 <br> B60L13/06 |
| A | EP-A-0 487 744 (KABUSHIKI KAISHA YASKAWA DENKI SEISAKUSHO) 3.Juni 1992 <br> * Spalte 4, Zeile 29 - Spalte 4, Zeile 56; Abbildung 3 * <br> ----- | 1 | |

**RECHERCHIERTE SACHGEBIETE (Int.Cl.6)**

B60L
B61B

Der vorliegende Recherchenbericht wurde für alle Patentansprüche erstellt

| Recherchenort | Abschlußdatum der Recherche | Prüfer |
|---|---|---|
| DEN HAAG | 8.August 1995 | Bolder, G |